# EUROPEAN PATENT SPECIFICATION

(11) **EP 2 300 752 B1**
(45) Date of publication and mention of the grant of the patent: **14.10.2015**
(21) Application number: 09738277.4
(22) Date of filing: 28.04.2009
(51) Int. Cl.: F24F 13/24, G10K 11/172, F16L 55/033

(54) **SOUND ATTENUATOR FOR LOW FREQUENCIES, METHOD FOR MANUFACTURING SOUND ATTENUATOR FOR LOW FREQUENCIES AND SYSTEM FOR ATTENUATING LOW FREQUENCIES FOR EXAMPLE IN AIR-CONDITIONING DUCTS OF PAPER MILLS**
SCHALLDÄMPFER FÜR NIEDRIGE FREQUENZEN, VERFAHREN ZUR HERSTELLUNG EINES SCHALLDÄMPFERS FÜR NIEDRIGE FREQUENZEN UND SYSTEM ZUR DÄMPFUNG VON NIEDRIGEN FREQUENZEN ZUM BEISPIEL IN KLIMAKANÄLEN VON PAPIERFABRIKEN
ATTÉNUATEUR ACOUSTIQUE POUR BASSES FRÉQUENCES, PROCÉDÉ DE FABRICATION D'UN ATTÉNUATEUR ACOUSTIQUE POUR BASSES FRÉQUENCES ET SYSTÈME D'ATTÉNUATION DE BASSES FRÉQUENCES PAR EXEMPLE DANS DES CONDUITS DE CONDITIONNEMENT D'AIR DE PAPETERIES

(30) Priority: 30.04.2008 FI 20085397
(43) Date of publication of application: 30.03.2011
(73) Proprietor: Valmet Technologies, Inc., 02150 Espoo (FI)
(72) Inventor: HELENIUS, Kalle, FI-21360 Lieto As. (FI); PETTERSSON, Henrik, FI-23100 Mynämäki (FI)
(74) Representative: Turun Patenttitoimisto Oy
(86) International application number: PCT/FI2009/050334
(87) International publication number: WO 2009/133240

(56) References cited:
- EP-A- 0 487 481
- EP-A- 0 495 763
- DE-A1- 3 322 204
- DE-A1- 3 330 471
- DE-A1- 3 935 350
- DE-A1- 19 506 511

## Description

The object of the invention is a sound attenuator for low frequencies, a method for manufacturing a sound attenuator for low frequencies and a system for attenuating low frequencies for example in air-conditioning ducts of paper mills according to what is presented in the preambles of the independent claims presented below.

### PRIOR ART

In a factory environment, for example in paper mills, various fans and vacuum pumps cause noise problems. From the factory, the noise is carried out into the immediate surroundings via air-conditioning ducts. Objectives regarding environmental protection and the comfort of the areas near the factory create a need for reducing the noise problems. Various types of attenuation solutions are used in noise control. Attenuators which have traditionally been used in paper mills, operating by the absorption principle, typically attenuate the higher 500-4000 Hz frequency components of the noise. With the new-type, so-called reactive attenuators also lower frequencies can be attenuated and thus the noise problems caused by the paper mills to the surroundings can be remarkably reduced.

In traditional absorption attenuators a part of the acoustic energy is absorbed into the porous material arranged inside the air-conditioning duct and is transformed into thermal energy. The effect of the reactive sound attenuators is based, through the geometric properties of the attenuator structure, either on reflection of sound waves or on the resonance phenomenon. Examples of attenuator types based on resonance are a pipe resonator, a Helmholtz resonator and a plate resonator.

The operation of a plate resonator attenuator is based on the transformation of sound energy into heat with the aid of a resonating acoustic system. The resonator consists of a nonporous plate or film, which separates the airspace from the sound field on the outside. Part of the sound energy is transformed into kinetic energy of the nonporous plate and through it into kinetic energy of the molecules of the airspace and into heat. There may also be an absorptive material, such as for example Dacron™, wool or foam plastic in the airspace. A maximal sound attenuation is obtained at the so-called resonant frequency, which can be determined by calculation when the depth of the airspace and the surface weight of the film or plate are known. The plate resonator differs from the Helmholtz-type resonator especially because there is an opening on the plate surface of the Helmholtz resonator, in which opening the vibrations of the formed air plug and chamber air provide the attenuation. The resonant frequency of the system, i.e. the frequency which corresponds to the maximal attenuation, also depends on the surface area of the opening and the length of the air plug formed in the opening.

The exhaust air from paper machines contains various impurities and in some cases also large amounts of moisture. Especially traditional absorptive attenuators are prone to fouling and the fouling of porous materials significantly weakens the attenuation. Servicing - cleaning or changing of the absorption attenuator is typically difficult. Of the reactive attenuators especially the Helmholtz resonators are prone to fouling and sometimes it is necessary to use a special protective film in front of the actual perforated resonant film. An advantage especially of the plate resonator is that fouling does not weaken the attenuation but transfers the attenuation to lower frequencies. Some plate resonator attenuator solutions have however turned out to be too fragile in a factory environment. The challenge has turned out to be providing a sufficient attenuation with solutions, which withstand factory conditions.

Many different materials have been tried for the materials of the sound attenuator frame and the plate of the plate resonator attenuator. Heat expansion has a harmful effect in solutions, where different materials have been combined, for examples when combining a steel framework with a plastic plate or an aluminium plate. The heat expansion affects the plastic plate or the aluminium plate and the steel framework in a different way, which leads to an alteration in the resonant frequency of the attenuator and thus in the attenuated frequency range.

The plate of the plate resonator is typically attached to the framework of the attenuator for example by screwing or welding. The large thermal stresses caused by the welding methods may however cause harmful changes in the shape of the plate or framework. The obtained seams have not necessarily been tight enough to provide a satisfactory attenuator structure.

One sound attenuator solution is presented in publication US 5,268,541.

A co-vibrating variable-volume resonator is disclosed in DE 3330471,

### OBJECT AND DESCRIPTION OF THE INVENTION

It is an object of the present invention to reduce or even eliminate the above-mentioned problems appearing in the prior art.

It is an object of the present invention to provide a solution, with which the noise of air-conditioning ducts and the like can be reduced for example in paper mills.

It is another object of the present invention to provide a solution, with which a sufficient attenuation is provided with a durable sound attenuator structure.

It is further an object of the present invention to provide a solution, wherein, by selecting the materials and dimensions correctly, attenuation is provided for just the suitable frequency range.

It is further an object of the present invention to provide a solution, where the sound attenuator can withstand high temperatures while the resonant frequency remains constant.

It is an object of the present invention to provide a sound attenuator, which is easy to clean.

The embodiments and advantages mentioned in this text relate, where applicable, both to the device, the method as well as to the system according to the invention, even though it is not always specifically mentioned.

A typical sound attenuator according to the invention can be arranged in any environment, where sound attenuation is appropriate, for example in a paper, pulp or paperboard mill. The sound attenuator can be arranged in connection with a structure, which is meant for transferring air from one space to another, for example an air-conditioning or ventilation duct, whereby the flow, which travels in the duct, can be arranged to pass through the sound attenuator. A typical sound attenuator according to the invention comprises a sound attenuator frame, which can be arranged for example in connection with an air-conditioning duct. The frame can be lined for example with mineral wool, foam plastic or Dacron™. The thickness of the insulating layer is typically 50-200 mm. The height of an individual attenuator frame is preferably between 500-3500 mm, for example about 1200, 1700 or 2200 mm. The width of the attenuator frame is preferably between 500-3500 mm, for example about 1400 mm, 2200 mm or 2400 mm. The depth of the attenuator frame is preferably between 500-5000 mm, for example about 1600 mm, 1800 mm, 2000 mm, 2200 mm or 2500 mm.

A typical attenuator member according to the invention comprises a first resonator plate, the outer surface of which is arranged to be the inner wall of the flow duct, along which outer surface the flow is arranged to travel. A typical attenuator member according to the invention also comprises a framework, whereto the first resonator plate is attached by its inner surface. A typical attenuator member according to the invention also comprises a second plate, which is essentially parallel to the first resonator plate and which second plate is attached to the framework by its inner surface, whereby the second plate, the framework and the first resonator plate delimit at least one attenuator unit. The airspace left between the framework and the plates can, if needed, be filled with an insulating material, such as mineral wool, foam plastic or Dacron™.

The first resonator plate attached to the framework of a typical sound attenuator according to the invention is a steel plate. In a typical solution according to the invention the first resonator plate is attached to the framework using laser welding. The advantages of laser welding are a high welding speed, a deep and narrow welding seam, good reproducibility and a small heat zone, whereby the risk of the framework or plate changing shape due to the heat is reduced. The framework of a typical sound attenuator according to the invention comprises a pressure balancing opening, with the aid of which the overpressure arising in the chamber formed by the framework and the plates for example during welding can be reduced. The pressure balancing opening usually leads from inside the framework to the outside of the attenuator member. The pressure balancing opening can for example be a valve, an aperture or a circular aperture on one of the plates of the framework. The size of the opening is preferably between 5-20 mm. The size of the circular aperture can for example be about 10 mm. The pressure balancing opening can also be a break in the welding seam. With the aid of the pressure balancing openings or the broken welding seams, also the pressure differences arising during the use of the attenuators can be reduced.

In this application resonator plate is used to mean a plate, which can be made to vibrate at a certain inherent frequency. In this application framework is used to mean a structure, which forms at least one essential rectangle and which can, when needed, be divided into parts, so that several essential rectangles are formed. The framework is formed out of a plate, the thickness of which is preferably 0.5-3 mm, for example 0.8-1.5 mm.

In a typical sound attenuator according to the invention at least one attenuator member, which operates according to the plate resonator principle, has been arranged in a detachable manner in connection with the air-conditioning duct and the sound attenuator frame. Between the attenuator member and the sound attenuator frame can be arranged for example a rail member.

In an advantageous embodiment of the present invention the framework of the sound attenuator comprises at least four essentially rectangular plates. In an advantageous embodiment of the present invention the framework is divided with the aid of several horizontal and vertical essentially rectangular plates in such a way that several essential rectangles are formed in the framework.

In an advantageous embodiment of the present invention the framework is at least mainly made up of plates, which are at least mainly perpendicular to the first resonator plate.

In an advantageous embodiment of the present invention both the attenuator member and the sound attenuator frame are mainly rectangular prisms.

In an advantageous embodiment of the present invention the attenuator units are mainly rectangular prisms.

In an advantageous device according to the present invention, the framework of the sound attenuator is of the same material as the first resonator plate. In this advantageous embodiment the adverse effects caused by the different heat expansion of different materials can be minimized. When the heat expansion affects the resonator plate and the framework in the same way, the resonant frequency of the attenuator remains constant despite a change in the temperature. In an advantageous embodiment of the invention the material of both the framework and the resonator plate is spring steel plate. A steel plate is typically a more durable solution for the air-conditioning ducts of a paper mill than for example plastic films or aluminium plates. An advantage of stainless steel is among others acid resistance. As the material for the framework and the resonator plate can be used EN 1.4404 class or a corresponding ASTM standard AISI 316 L stainless acid resistant steel plate. Steel in class EN 1.4404 contains at the most 3 % molybdenum, which improves the corrosion resistance of the material. The material can however easily be formed and is suitable especially for welding.

In an embodiment of the invention the first resonator plate is manufactured from annealing rolled steel plate. In addition to the first resonator plate also the framework and the second plate can be of annealing rolled steel plate.

In an embodiment of the invention the resonator plate is welded to the framework using continuous laser welding, whereby the seam between them becomes at least essentially continuous. Thus the attenuator member can be made essentially airtight so that the pressure balancing on its inside is done only through the pressure balancing opening. The tight seams also prevent dirt and water from getting inside the attenuator member.

In a device according to the present invention the length of the edges of the attenuator member in the direction of the surface of the first resonator plate is 500-3000 mm and the length of the edges of the attenuator member that are essentially perpendicular to the surface of the first resonator plate is 50-300 mm, preferably 90-210 mm. In an advantageous embodiment the length of the shorter edges in the direction of the surface of the first resonator plate is about 600, 700, 780, 800, 900, 930, 1000 mm or between 500-1100 mm, and the length of the longer edges is about 1000, 1500, 2000 mm or between 800-2200 mm. The advantageous shape and dimensions of the attenuator member enable the substitution of the traditional absorption attenuator member with a plate resonator attenuator member according to the invention. The absorption attenuator members arranged in the sound attenuator frame can for example all be switched to plate resonator attenuator members according to the invention.

In a device according to the present invention the attenuator member comprises one or more attenuator units, wherein the length of the edges essentially in the direction of the surface of the first resonator plate is 200-1500 mm and the length of the edges that are essentially perpendicular to the surface of the first resonator plate is 50-150 mm, preferably 90-110 mm. In an advantageous embodiment the length of the shorter edges of the attenuator unit in the direction of the first resonator plate is 200-400 mm and the length of the longer edges is 500-1100 mm. By selecting advantageous dimensions for the attenuator unit and by welding the resonator plate to a suitable tension, the maximal attenuation, i.e. the resonant frequency, can be set at a suitable frequency range. The resonant frequency is defined mainly according to the depth of the airspace of the attenuator unit and the surface weight of the plate. In this application by resonant frequency is meant the frequency, in practice the frequency range, where the acoustic system vibrates with the maximal amplitude. The resonant frequency corresponds, for the sound attenuator presented in the application, to a frequency range, where the attenuation it produces is at its strongest.

In an advantageous device according to the present invention the second plate, which is comprised in the attenuation member, is a steel plate and is attached to the framework using laser welding. In an advantageous embodiment the material of the second plate is spring steel plate. In an advantageous embodiment the material of the second plate is steel in class EN 1.4404.

In a device according to the present invention the second plate, which is comprised in the attenuator member, is a resonator plate, whereby the distance between the first and the second resonator plate is for example 50-300 mm. In an advantageous device according to the invention the distance between the first and the second resonator plate is for example 50-250 mm.

In a device according to the present invention a third plate is arranged in connection with the framework and between the first and the second resonator plate, substantially parallel to these, which third plate is arranged to divide the attenuator member into two parts, so that attenuator units are formed between the resonator plates, in which units the length of the edges that are essentially perpendicular to the surface of the resonator plates is 50-150 mm. In an advantageous device according to the invention the length of the edges of the attenuator units that are essentially perpendicular to the surface of the resonator plates is 90-110 mm. Such two-sided attenuator members can be arranged for example into the middle part of an air-conditioning duct. The attenuator members, which are in the immediate vicinity of the walls of the sound attenuator frame, can either be one-sided or two-sided. The thickness of the third plate, which is arranged to divide the attenuator member, is preferably 0.5-3 mm, for example 0.8-1.5 mm.

In an advantageous device according to the present invention the thickness of the first or second resonator plate is 0.1-0.5 mm. In some advantageous embodiments of the invention the thickness of the first or second resonator plate is in any of the ranges 0.10-0.19 mm, 0.10-0.25 mm, 0.10-0.35 mm, 0.25-0.35 mm, 0.25-0.5 mm or 0.35-0.5 mm. In an advantageous embodiment of the invention the thickness of both the first and the second resonator plate is 0.25-0.35 mm.

In an advantageous solution according to the present invention the resonant frequency of the sound attenuator is in the frequency range 80-800 Hz. In some advantageous embodiments of the invention the resonant frequency is in any of the ranges 80-200 Hz, 100-350 Hz, 200-450 Hz or 400-800 Hz. In an advantageous embodiment of the invention the resonant frequency of the sound attenuator is in the range 80-315 Hz. The plate resonator can be optimized so that it attenuates especially those frequencies, which are left in the air-conditioning duct after the absorption attenuation.

In an advantageous solution according to the present invention at least one sound attenuator member, based on absorption attenuation, is further arranged inside the attenuator frame. The absorption attenuators, which are traditionally used in the air-conditioning ducts of a paper mill, attenuate 500-4000 Hz frequency components. By arranging traditional absorption attenuators into the frame, in addition to the plate resonator attenuators according to the invention, the frequency range of the maximal attenuation of the sound attenuator can be altered. In this application by absorption attenuator is meant a sound attenuator, the function of which is based on the absorption of acoustic energy into a porous material. In this application absorption attenuator member is used to mean a part of the above-specified absorption attenuator, which comprises porous material.

In a typical manufacturing method for a sound attenuator according to the invention the attenuator member is manufactured by attaching a first resonator plate and a second plate to an essentially rectangular framework, which attenuator member is meant to be placed in the frame of a sound attenuator, which is meant to be arranged for example in connection with an air-conditioning duct of a paper mill. In a typical method according to the invention the first resonator plate is further laser welded in connection to the framework and the pressure is balanced with the aid of a pressure balancing opening arranged in the framework. The first resonator plate is welded to such a tension that the resonant frequency is set between 80-800 Hz.

In a manufacturing method for a sound attenuator according to the invention the resonant frequency of the first resonator plate attached to the framework is set at a desired level by arranging a weight on the plate surface or by painting, using a film, tape or with some other surface treatment.

In a manufacturing method for a sound attenuator according to the invention the resonant frequency of the first resonator plate attached to the framework is determined by measuring the frequency of the sound produced by the resonator plate when struck. When the plate is knocked, it starts to vibrate with a frequency which is inherent to it, i.e. the resonant frequency. The resonant frequency again corresponds to the frequency of the maximal sound attenuation. The sound produced by the knock can be measured for example with a microphone suitable for the purpose.

A typical system according to the invention for attenuating low frequencies for example in air-conditioning ducts of paper mills comprises subsequently at least one sound attenuator based on the absorption method and at least one sound attenuator based on the plate resonator method.

An advantageous system according to the invention comprises at least one sound attenuator according to the invention, based on the plate resonator method.

### BRIEF DESCRIPTION OF THE FIGURES

The invention is described in more detail below with reference to the enclosed schematic drawing, in which
- Figure 1: An example according to the invention of a sound attenuator frame, which has detachably arranged attenuator members
- Figure 2: An example according to the invention of an attenuator member
- Figure 3: An example according to the invention of a framework, a first resonator plate, a second plate and an attenuator unit of an attenuator member
- Figure 4: An example according to the invention of an attenuator member, which comprises a third plate
- Figure 5: A measurement result of a sound attenuator according to the invention
- Figure 6: An example according to the invention of a method for manufacturing a sound attenuator for low frequencies
- Figure 7: An example according to the invention of a system for attenuating low frequencies for example in the air-conditioning ducts of paper mills

### DETAILED DESCRIPTION OF THE EXAMPLES OF THE FIGURES

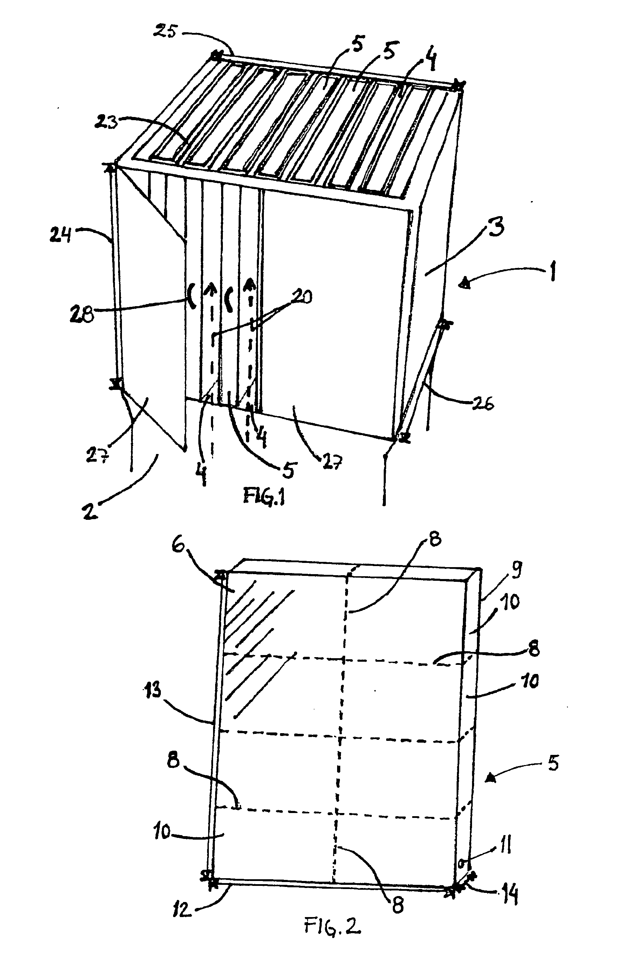

Figure 1 shows as a schematic view an example of a sound attenuator 1 according to the invention. In the example in the figure the sound attenuator 1 is arranged in connection with an air-conditioning duct 2. The sound attenuator 1 comprises a sound attenuator frame 3, which comprises a flow duct 4. Attenuator members 5 are detachably arranged in connection with the sound attenuator frame 3. In the example according to the figure the attenuator members 5 can be moved with the aid of rail elements 23 arranged between the sound attenuator frame 3 and the attenuator members 5. The height 24 of the sound attenuator frame is about 2000 mm and the width 25 about 2400 mm in the example of the figure. The depth 26 of the sound attenuator frame is about 2200 mm in the example of the figure. Doors 27 can be arranged in the sound attenuator frame and handles 28 in the attenuator members. The main direction 20 of the flow travelling in the air-conditioning duct 2 is marked in the figure.

Figure 2 shows as a schematic view an example according to the invention of an attenuator member 5. The attenuator member comprises a framework 7 and a first resonator plate 6, which is attached by its inner surface to the framework. A second plate 9 is further attached by its inner surface to the framework 7, which second plate can also be a resonator plate. The second plate 9, the framework 7 and the first resonator plate 6 delimit at least one attenuator unit 10, which is essentially in the shape of a rectangular prism. In the example in the figure the edges of the framework 7 are made up of four plates and there is further one vertical and three horizontal plates 8 in the framework, whereby there are 8 attenuator units 10. A pressure balancing opening 11 is further arranged in the framework 7. In the example in the figure the length of the shorter edges 12 of the attenuator member 5 in the direction of the first resonator plate 6 is about 800 mm and the length of the longer edges 13 is about 1000 mm. The length of the edges 14 of the attenuator member 5 in a perpendicular direction to the surface of the first resonator plate 6 is about 100 mm in the example of the figure.

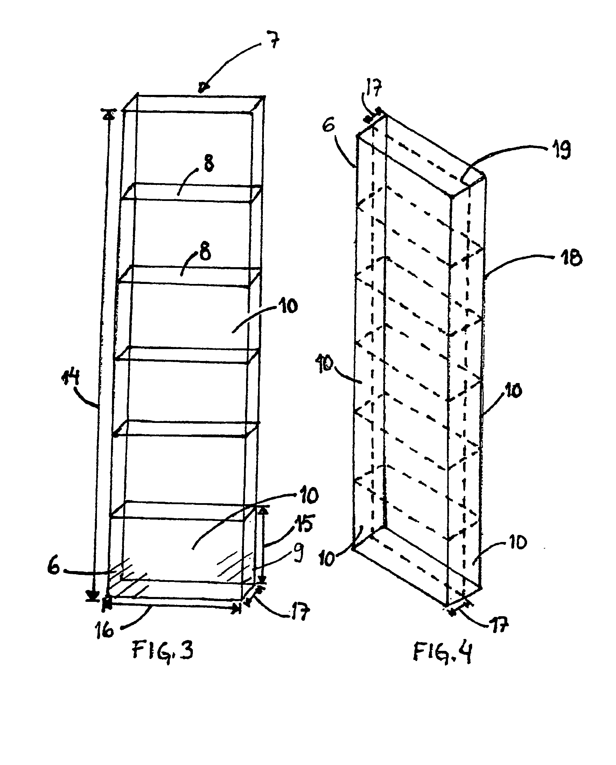

Figure 3 shows as a schematic view an example of a framework 7 of an attenuator member according to the invention. The framework 7 makes up at least one essential rectangle, which can when needed be divided into parts, whereby several essential rectangles are formed. In the example in the figure the framework 7 is divided into six parts of the same size with the aid of five horizontal essentially rectangular plates 8. In the example in the figure the framework 7 is made up of a plate, which is about 1 mm thick. The framework 7 is divided so that when combined with the first resonator plate 6 and the second plate 9, the framework makes up attenuator units 10 of a desired size. The length of the shorter edges 15 of the attenuator unit 10 essentially in the direction of the surface of the first resonator plate 6 is 200 mm in the example of the figure and the length of the longer edges 16 is 500 mm. The length of the edges 17 essentially in a perpendicular direction to the surface of the first resonator plate 6 is 100 mm in the example of the figure.

Figure 4 shows an example according to the invention of an attenuator member 5, where a third plate 19 is arranged in connection with the framework 7 and between the first 6 and the second resonator plate 18, substantially parallel to these, which third plate 19 is arranged to divide the attenuator member 5 into two parts, so that attenuator units 10 are formed between the resonator plates, in which units the length of the edges 17 that are essentially perpendicular to the surface of the resonator plates in the example in the figure is 100 mm. Such two-sided attenuator members 5 can be arranged for example into the middle part of an air-conditioning duct 2. The attenuator members 5, which are in the immediate vicinity of the walls of the sound attenuator frame 3, can either be one-sided or two-sided. The thickness of the third plate 19, arranged to divide the attenuator member 5, is 1 mm in the example of the figure.

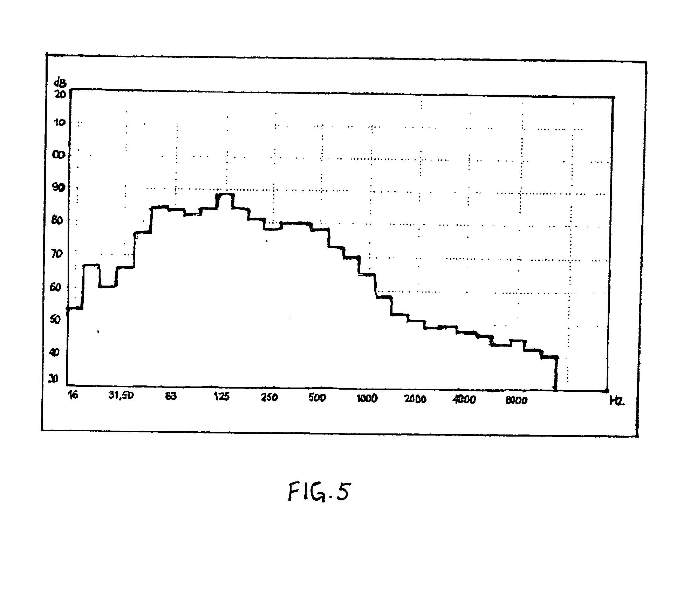

Figure 5 shows a measuring result, where the frequency of the sound, which the first resonator plate 6 attached to the framework produces when struck, has been measured. On the horizontal axis the frequency is presented in the unit hertz Hz and on the vertical axis the volume in the unit decibel dB. The surface of the first resonator plate 6 is knocked and the volume is measured with a microphone suitable for the purpose. According to the graph drawn from the measurement results, the volume of the sound caused by the knock is at its largest essentially in the frequency range 50-500 Hz. The frequency of the sound produced by the first resonator plate 6 corresponds to the frequency range of the maximal attenuation of the sound attenuator. The maximal attenuation is advantageously in the frequency range 80-800 Hz and for example 80-315 Hz.

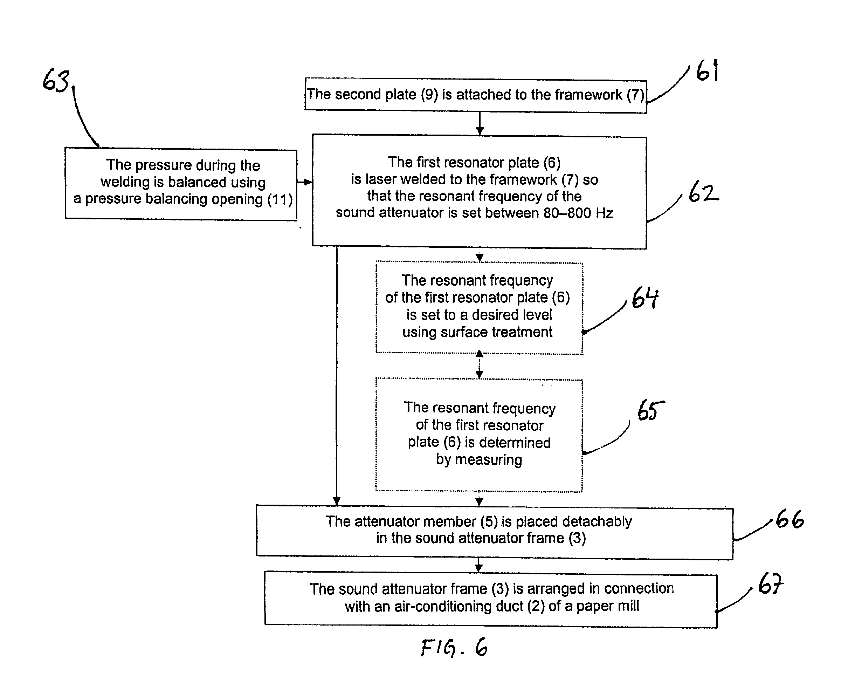

Figure 6 shows as a flow chart an example of a method according to the invention for manufacturing a sound attenuator for low frequencies. In stage 61 of the exemplary method description a second plate 9 is attached to the framework 7. In method stage 62 the first resonator plate 6 is laser welded to the framework 7 so that the resonant frequency of the sound attenuator is set between 80-800 Hz. The pressure is balanced 63 with the pressure balancing opening 11. In method stage 64 the resonant frequency of the first resonator plate 6 is adjusted to a desired level using surface treatment. In method stage 65 the resonant frequency of the first resonator plate 6 is determined by measuring. Stages 64 and 65 can in the example be left out completely. The method stages 64 and 65 can also be repeated until the pursued measurement result is achieved. In method stage 66 the attenuator member 5 is placed detachably in the sound attenuator frame 3. In the method stage 67 of the example the sound attenuator frame 3 is arranged in connection with an air-conditioning duct of a paper mill.

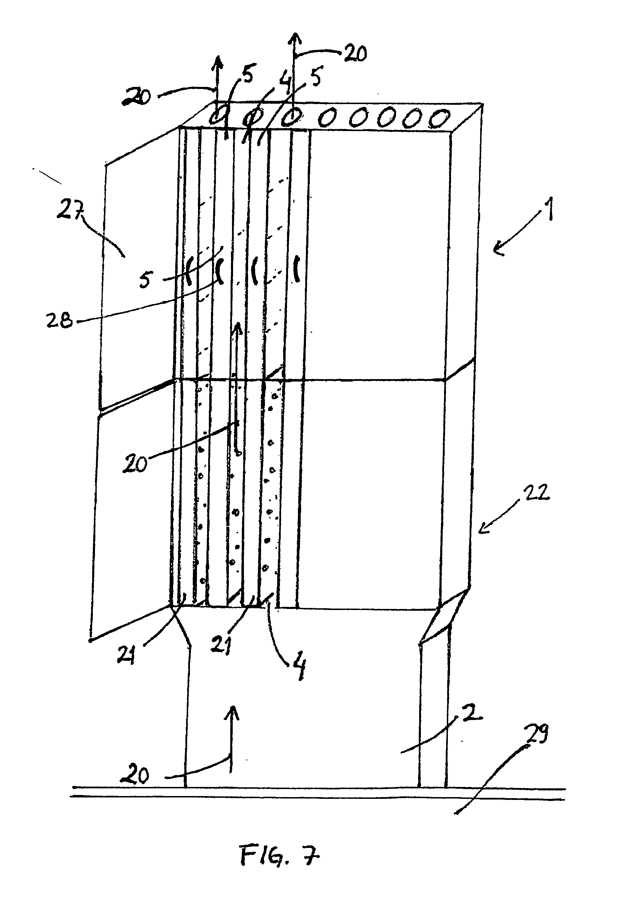

Figure 7 shows an example of a system according to the invention for attenuating low frequencies for example in air-conditioning ducts of paper mills. In connection with the air-conditioning duct 2 of the paper mill, on the roof 29 of the paper mill, a sound attenuator 22 based on the absorption method is arranged in the example of the figure. In addition to the attenuator based on the absorption method, a sound attenuator 1 based on the plate resonator method is further arranged in connection with the air-conditioning duct in the example in the figure. The main direction 20 of the flow travelling in the air-conditioning duct in the example has been marked in the figure. The attenuators or one of them can be placed also inside the building under the roof 29.

The invention is not meant to be limited to the embodiments shown as examples above, but the aim is to interpret it extensively within the scope of protection defined in the claims presented below.

## Claims

1. A sound attenuator (1) for low frequencies for example for an air-conditioning duct (2) of paper mills, the flow (20) travelling in which duct can be arranged to pass through the sound attenuator, which sound attenuator comprises a sound attenuator frame (3), which can be arranged in connection with the air-conditioning duct, and which sound attenuator frame comprises a flow duct (4) and, arranged in connection with the sound attenuator frame, at least one attenuator member (5) operating according to the plate resonator principle, which attenuator member comprises
- a first resonator plate (6), the outer surface of which is arranged to be the inner wall of the flow duct, i.e. along which outer surface the flow is arranged to travel, and which first resonator plate is a steel plate,
- a framework (7), whereto the first resonator plate is attached by its inner surface,
- a second plate (9), which is substantially parallel to the first resonator plate and which second plate is attached to the framework by its inner surface,
whereby the second plate, the framework and the first resonator plate outline at least one attenuator unit (10),
**characterized in that**
- the first resonator plate is attached to the framework using laser welding, and
- the framework comprises a pressure balancing opening (11).

2. The sound attenuator according to claim 1, **characterized in that** at least one attenuator member (5) is arranged in connection with the sound attenuator frame in a detachable manner.

3. The sound attenuator according to any of the preceding claims, **characterized in that** the framework (7) is at least mainly made up of plates (8), which are perpendicular to the first resonator plate (6).

4. The sound attenuator according to any of the preceding claims, **characterized in that** the sound attenuator frame (3), the attenuator member (5) and the attenuator units (10) are substantially rectangular prisms.

5. The sound attenuator according to any of the preceding claims, **characterized in that** the framework (7) is of the same material as the first resonator plate (6).

6. The sound attenuator according to any of the preceding claims, **characterized in that** the first resonator plate is attached to the framework using continuous laser welding.

7. The sound attenuator according to any of the preceding claims, **characterized in that** the length of the edges (12, 13) of the attenuator member (5) in the direction of the surface of the first resonator plate (6) is 500-3000 mm and the length of the edges (14) of the attenuator member that are essentially perpendicular to the surface of the first resonator plate is 50-300 mm.

8. The sound attenuator according to any of the preceding claims, **characterized in that** the second plate (9) is a steel plate and is attached to the framework (7) using laser welding.

9. The sound attenuator according to claim 8, **characterized in that** the second plate (9) is a resonator plate, whereby the distance between the first (6) and the second resonator plate (18) is 100-350 mm.

10. The sound attenuator according to claim 9, **characterized in that** a third plate (19) is arranged in connection with the framework (7) and between the first (6) and the second resonator plate (18), substantially parallel to these, which third plate (19) is arranged to divide the attenuator member (5) into two parts, so that attenuator units (10) are formed between the resonator plates, in which units the length of the edges (17) that are essentially perpendicular to the surface of the resonator plates is 50-150 mm.

11. The sound attenuator according to any of the preceding claims, **characterized in that** the thickness of the first (6) or the second resonator plate (18) is 0.1-0.5 mm, preferably 0.25-0.35 mm.

12. The sound attenuator according to any of the preceding claims, **characterized in that** at least one sound attenuator member (21), based on absorptive attenuation, is further arranged inside the sound attenuator frame (3).

13. A method for manufacturing a sound attenuator (1) for low frequencies, in which method an attenuator member (5) is manufactured by attaching to an essentially rectangular framework (7) a first resonator plate (6) and a second plate (9), which attenuator member is meant to be placed into a sound attenuator frame (3), which is meant to be arranged for example in connection with an air-conditioning duct (2) of a paper mill
**characterized in that**
- the first resonator plate is laser welded in connection with the framework,
- the pressure is balanced with the aid of a pressure balancing opening (11) arranged in the framework,
- the first resonator plate is laser welded to such a tension that the resonant frequency of the sound attenuator is set between 80-800 Hz.

14. The method according to claim 13, **characterized in that** the resonant frequency of the first resonator plate (6) attached to the framework (7) is set to a desired level using weights, painting, foil, tape or other surface treatment.

15. A system for attenuating low frequencies, for example in air-conditioning ducts (2) of paper mills, which system comprises subsequently at least one sound attenuator (22) based on the absorption method and at least one sound attenuator (1) based on the plate resonator method,
**characterized in that** at least one sound attenuator (1) based on the plate resonator method is a sound attenuator according to any of the claims 1-12.

## Patentansprüche

1. Schalldämpfer (1) für niedrige Frequenzen, zum Beispiel für einen Klimatisierungskanal (2) von Papierfabriken, wobei die Strömung (20), die in dem Kanal läuft, angeordnet werden kann, um den Schalldämpfer zu durchlaufen, der einen Schalldämpferrahmen (3), der in Verbindung mit dem Klimatisierungskanal angeordnet werden kann und einen Strömungskanal (4) aufweist, und, in Verbindung mit dem Schall-dämpferrahmen angeordnet, mindestens ein Dämpferbauteil (5) aufweist, das gemäß dem Plattenresonatorprinzips wirkt, wobei das Dämpferbauteil Folgendes aufweist:
- eine erste Resonatorplatte (6), deren äußere Fläche angeordnet ist, um die innere Wand des Strömungskanals zu sein, das heißt, die Strömung ist angeordnet, um entlang dieser äußeren Fläche zu laufen, und wobei die erste Resonatorplatte eine Stahlplatte ist,
- ein Rahmenwerk (7), an dem die erste Resonatorplatte durch ihre innere Fläche befestigt ist,
- eine zweite Platte (9), die im Wesentlichen parallel zu der ersten Resonatorplatte ist und an dem Rahmenwerk durch ihre innere Fläche befestigt ist,
wodurch die zweite Platte, das Rahmenwerk und die erste Resonatorplatte mindestens eine Dämpfereinheit (10) bilden,
**dadurch gekennzeichnet, dass**
- die erste Resonatorplatte unter Verwendung von Laserschweißen an dem Rahmenwerk befestigt ist, und
- das Rahmenwerk eine Druckausgleichsöffnung (11) aufweist.

2. Schalldämpfer gemäß Anspruch 1, **dadurch gekennzeichnet, dass** mindestens ein Dämpferbauteil (5) in abnehmbarer Weise in Verbindung mit dem Schalldämpferrahmen angeordnet ist.

3. Schalldämpfer gemäß einem der vorhergehenden Ansprüche, **dadurch gekennzeichnet, dass** das Rahmenwerk (7) zumindest hauptsächlich aus Platten (8) gemacht ist, die rechtwinklig zu der ersten Resonatorplatte (6) sind.

4. Schalldämpfer gemäß einem der vorhergehenden Ansprüche, **dadurch gekennzeichnet, dass** der Schalldämpferrahmen (3), das Dämpferbauteil (5) und die Dämpfereinheiten (10) im Wesentlichen rechteckige Prismen sind.

5. Schalldämpfer gemäß einem der vorhergehenden Ansprüche, **dadurch gekennzeichnet, dass** das Rahmenwerk (7) aus dem gleichen Material wie die erste Resonatorplatte (6) ist.

6. Schalldämpfer gemäß einem der vorhergehenden Ansprüche, **dadurch gekennzeichnet, dass** die erste Resonatorplatte unter Verwendung von durchgehendem Laserschweißen an dem Rahmenwerk befestigt ist.

7. Schalldämpfer gemäß einem der vorhergehenden Ansprüche, **dadurch gekennzeichnet, dass** die Länge von den Rändern (12, 13) des Dämpferbauteils (5) in der Richtung der Fläche der ersten Resonatorplatte (6) 500-3000 mm ist, und die Länge von den Rändern (14) des Dämpferbauteils, die im Wesentlichen rechtwinklig zu der Fläche der ersten Resonatorplatte sind, 50-300 mm ist.

8. Schalldämpfer gemäß einem der vorhergehenden Ansprüche, **dadurch gekennzeichnet, dass** die zweite Platte (9) eine Stahlplatte ist und unter Verwendung von Laserschweißen an dem Rahmenwerk (7) befestigt ist.

9. Schalldämpfer gemäß Anspruch 8, **dadurch gekennzeichnet, dass** die zweite Platte (9) eine Resonatorplatte ist, wodurch der Abstand zwischen der ersten (6) und der zweiten Resonatorplatte (18) 100-350 mm ist.

10. Schalldämpfer gemäß Anspruch 9, **dadurch gekennzeichnet, dass** eine dritte Platte (19) in Verbindung mit dem Rahmenwerk (7) und zwischen der ersten (6) und der zweiten Resonatorplatte (18), im Wesentlichen parallel zu diesen angeordnet ist, wobei die dritte Platte (19) angeordnet ist, um das Dämpferbauteil (5) in zwei Teile zu teilen, sodass Dämpfereinheiten (10) zwischen den Resonatorplatten gebildet werden, in denen die Länge der Ränder (17), die im Wesentlichen rechtwinklig zu der Fläche der Resonatorplatten sind, 50-150 mm ist.

11. Schalldämpfer gemäß einem der vorhergehenden Ansprüche, **dadurch gekennzeichnet, dass** die Dicke der ersten (6) oder der zweiten Resonatorplatte (18) 0,1-0,5 mm, vorzugsweise 0,25-0,35 mm ist.

12. Schalldämpfer gemäß einem der vorhergehenden Ansprüche, **dadurch gekennzeichnet, dass** des Weiteren mindestens ein Schalldämpferbauteil (21), das auf absorbierender Dämpfung basiert, innerhalb des Schalldämpferrahmens (3) angeordnet ist.

13. Verfahren zur Herstellung eines Schalldämpfers (1) für niedrige Frequenzen, wobei ein Dämpferbauteil (5) durch Befestigen einer ersten Resonatorplatte (6) und einer zweiten Resonatorplatte (9) an einem im Wesentlichen rechteckigen Rahmenwerk (7) hergestellt wird, wobei das Dämpferbauteil dazu bestimmt ist, in einem Schalldämpferrahmen (3) platziert zu werden, der zur Anordnung beispielsweise in Verbindung mit einem Klimatisierungskanal (2) von einer Papierfabrik bestimmt ist,
**dadurch gekennzeichnet, dass**
- die erste Resonatorplatte in Verbindung mit dem Rahmenwerk (7) lasergeschweißt wird,
- der Druck mit der Hilfe von einer Druckausgleichsöffnung (11), die in dem Rahmenwerk angeordnet ist, ausgeglichen wird,
- die erste Resonatorplatte zu solch einer Spannung lasergeschweißt wird, dass die Resonanzfrequenz des Schalldämpfers zwischen 80-800 Hz festgelegt ist.

14. Verfahren gemäß Anspruch 13, **dadurch gekennzeichnet, dass** die Resonanzfrequenz der ersten Resonatorplatte (6), die an dem Rahmenwerk (7) befestigt ist, auf ein gewünschtes Niveau, unter Verwendung von Gewichten, eines Anstrichs, einer Folie, einem Band oder einer anderen Flächenbehandlung, festgelegt ist.

15. System zur Dämpfung niedriger Frequenzen, zum Beispiel in Klimatisierungskanälen (2) von Papierfabriken, wobei das System mindestens einen Schalldämpfer (22), der auf dem Absorptionsverfahren basiert, und mindestens einen Schalldämpfer (1), der auf dem Resonatorverfahren basiert, aufweist,
**dadurch gekennzeichnet, dass** mindestens ein Schalldämpfer (1), der auf dem Plattenresonatorverfahren basiert, ein Schalldämpfer gemäß einem der Ansprüche 1-12 ist.

## Revendications

1. Atténuateur de son (1) pour basses fréquences par exemple pour un conduit de conditionnement d'air (2) de moulins à papier, le flux (20) avançant dans lequel conduit peut être agencé pour passer à travers l'atténuateur de son, lequel atténuateur de son comprend une structure d'atténuateur de son (3), qui peut être agencée en liaison avec le conduit de conditionnement d'air, et laquelle structure d'atténuateur de son comprend un conduit d'écoulement (4) et, agencé en liaison avec la structure d'atténuateur de son, au moins un élément atténuateur (5) fonctionnant selon le principe du résonateur à plaque, lequel élément atténuateur comprend
une première plaque de résonateur (6), dont la surface extérieure est agencée pour être la paroi intérieure du conduit d'écoulement, c'est à dire le long de laquelle surface extérieure le flux est agencé pour avancer, et laquelle première plaque de résonateur est une plaque d'acier,
une armature (7) sur laquelle la première plaque de résonateur est fixée par sa surface intérieure,
une seconde plaque (9), qui est sensiblement parallèle à la première plaque de résonateur et laquelle seconde plaque est fixée sur l'armature par sa surface intérieure,
moyennant quoi la seconde plaque, l'armature et la première plaque de résonateur constituent au moins une unité d'atténuateur (10),
**caractérisé en ce que**
la première plaque de résonateur est fixée sur l'armature en utilisant le soudage laser, et
l'armature comprend une ouverture d'équilibrage de pression (11).

2. Atténuateur de son selon la revendication 1, **caractérisé en ce qu'**au moins un élément atténuateur (5) est agencé en liaison avec la structure d'atténuateur de son d'une manière détachable.

3. Atténuateur de son selon l'une quelconque des revendications précédentes, **caractérisé en ce que** l'armature (7) est au moins en partie faite de plaques (8), qui sont perpendiculaires à la première plaque de résonateur (6).

4. Atténuateur de son selon l'une quelconque des revendications précédentes, **caractérisé en ce que** la structure d'atténuateur de son (3), l'élément atténuateur (5) et les unités d'atténuateur (10) sont des prismes sensiblement rectangulaires.

5. Atténuateur de son selon l'une quelconque des revendications précédentes, **caractérisé en ce que** l'armature (7) est du même matériau que la première plaque de résonateur (6).

6. Atténuateur de son selon l'une quelconque des revendications précédentes, **caractérisé en ce que** la première plaque de résonateur est fixée sur l'armature en utilisant un soudage laser continu.

7. Atténuateur de son selon l'une quelconque des revendications précédentes, **caractérisé en ce que** la longueur des bords (12, 13) de l'élément atténuateur (5) dans la direction de la surface de la première plaque de résonateur (6) est de 500-3000 mm et la longueur des bords (14) de l'élément atténuateur qui sont sensiblement perpendiculaires à la surface de la première plaque de résonateur est de 50-300 mm.

8. Atténuateur de son selon l'une quelconque des revendications précédentes, **caractérisé en ce que** la seconde plaque (9) est une plaque d'acier et est fixée sur l'armature (7) en utilisant le soudage laser.

9. Atténuateur de son selon la revendication 8, **caractérisé en ce que** la seconde plaque (9) est une plaque de résonateur, moyennant quoi la distance entre la première (6) et la seconde plaque de résonateur (18) est de 100-350 mm.

10. Atténuateur de son selon la revendication 9, **caractérisé en ce qu'**une troisième plaque (19) est agencée en liaison avec l'armature (7) et entre la première (6) et la seconde plaque de résonateur (18), sensiblement parallèle à celles-ci, laquelle troisième plaque (19) est agencée pour diviser l'élément atténuateur (5) en deux parties, de telle manière que des unités d'atténuateur (10) sont formées entre les plaques de résonateur, dans lesquelles unités la longueur des bords (17) qui sont sensiblement perpendiculaires à la surface des plaques de résonateur est de 50-150 mm.

11. Atténuateur de son selon l'une quelconque des revendications précédentes, **caractérisé en ce que** l'épaisseur de la première (6) et la seconde plaque de résonateur (18) est de 0,1-0,5 mm, de préférence 0,25-0,35 mm.

12. Atténuateur de son selon l'une quelconque des revendications précédentes, **caractérisé en ce qu'**au moins un élément d'atténuateur de son (21), basé sur l'atténuation par absorption, est en outre agencé à l'intérieur de la structure d'atténuateur de son (3).

13. Procédé de fabrication d'un atténuateur de son (1) pour basses fréquences, dans lequel procédé un élément atténuateur (5) est fabriqué en fixant sur une armature (7) sensiblement rectangulaire une première plaque de résonateur (6) et une seconde plaque (9), lequel élément atténuateur est destiné à être placé dans une structure d'atténuateur de son (3), qui est destinée à être agencée par exemple en liaison avec un conduit de conditionnement d'air (2) d'un moulin à papier
**caractérisé en ce que**
la première plaque de résonateur est soudé par laser en liaison avec l'armature,
la pression est équilibrée à l'aide d'une ouverture d'équilibrage de pression (11) agencée dans l'armature,
la première plaque de résonateur est soudée par laser à une tension telle que la fréquence de résonance de l'atténuateur de son est réglée entre 80-800 Hz.

14. Procédé selon la revendication 13, **caractérisé en ce que** la fréquence de résonance de la première plaque de résonateur (6) fixée sur l'armature (7) est réglée à un niveau souhaité en utilisant des poids, de la peinture, une ailette, une bande ou autre traitement de surface.

15. Système d'atténuation de basses fréquences, par exemple dans des conduits de conditionnement d'air (2) de moulins à papier, lequel système comprend se succédant au moins un atténuateur de son (22) basé sur le procédé d'absorption et au moins un atténuateur de son (1) basé sur le procédé de résonateur à plaque,
**caractérisé en ce qu'**au moins un atténuateur de son (1) basé sur le procédé de résonateur à plaque est un atténuateur de son selon l'une quelconque des revendications 1-12.
